(19) **Europäisches Patentamt**
**European Patent Office**
**Office européen des brevets**

(11) **EP 3 926 569 A1**

(12) **EUROPEAN PATENT APPLICATION**
published in accordance with Art. 153(4) EPC

(43) Date of publication:
**22.12.2021 Bulletin 2021/51**

(51) Int Cl.:
**G06Q 30/02** *(2012.01)* **G06Q 10/04** *(2012.01)*

(21) Application number: **19920478.5**

(86) International application number:
**PCT/JP2019/010873**

(22) Date of filing: **15.03.2019**

(87) International publication number:
**WO 2020/188637 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventor: **KOBE, Takasumi**
**Tokyo 100-8310 (JP)**

(74) Representative: **Pfenning, Meinig & Partner mbB**
**Patent- und Rechtsanwälte**
**An der Frauenkirche 20**
**01067 Dresden (DE)**

(54) **DEMAND PREDICTION DEVICE AND DEMAND PREDICTION METHOD**

(57) The demand prediction device (1) processes first related data to resemble first result data, selects data similar to the processed first related data from second result data and second related data, adjusts a waveform of the second related data in accordance with a trend of the selected second result data, and selects a prediction model in accordance with the trend of the second result data to perform demand prediction.

FIG. 1

**Description**

TECHNICAL FIELD

The present invention relates to a demand prediction device and a demand prediction method.

BACKGROUND ART

For example, the demand prediction device described in Patent Literature 1 predicts the demand for parts by using a multivariate analysis model. In the multivariate analysis model, the result number of delivered parts is used as a solution, the number of operating devices having the parts is used as a factor, the operating time of the device is used as a factor, and an economic indicator for a designated period is used as a factor. The economic indicator is an economic indicator related to the demand for parts, such as the index of business conditions, the average stock price, or the fuel price.

CITATION LIST

PATENT LITERATURES

Patent Literature 1: JP 2015-118412 A

SUMMARY OF INVENTION

TECHNICAL PROBLEM

In the demand prediction device described in Patent Literature 1, in order to construct a multivariate analysis model using an economic indicator as a factor, economic indicator data of a designated period retroactive from the reference period is used.
However, economic indicator data for a designated period that is deviated by a predetermined time from the reference period tends to cause an error between the economic fluctuation from the reference period and the time when demand for parts occurs, and thus there is a problem that the demand for products cannot be predicted accurately.
The present invention solves the above problem, and has an object to obtain a demand prediction device and a demand prediction method capable of accurately predicting the demand for a product.

SOLUTION TO PROBLEM

The demand prediction device according to the present invention includes an analysis unit for processing first related data to resemble first result data, on a basis of a similarity of waveform between the first result data which is time series data of a past demand result value of a product and the first related data which is time series data of information related to past demand of the product, selecting data similar to the processed first related data, from second result data which is time series data of a demand result value of the product and second related data which is time series data of information related to demand of the product, and adjusting a waveform of the second related data in accordance with a trend of the second result data, and a prediction model selecting unit for selecting a prediction model in accordance with the trend of the second result data selected by the analysis unit, from a plurality of prediction models, and performing demand prediction of the product, by using the selected prediction model, and the second result data and the second related data selected by the analysis unit.

ADVANTAGEOUS EFFECTS OF INVENTION

According to the present invention, first related data is processed to resemble first result data, on a basis of a similarity of waveform between the first result data which is time series data of a past demand result value of a product and the first related data which is time series data of information related to past demand of the product, data similar to the processed first related data is selected from second result data which is a time series of a demand result value of the product and second related data which is time series data of information related to demand for the product, and a waveform of the second related data is adjusted in accordance with a trend of the selected second result data to select a prediction model in accordance with the trend of the second result data. As a result, the trend of the demand for the product is reflected in the prediction model and data used for demand prediction of the product, so that the demand for the product can be accurately predicted.

BRIEF DESCRIPTION OF DRAWINGS

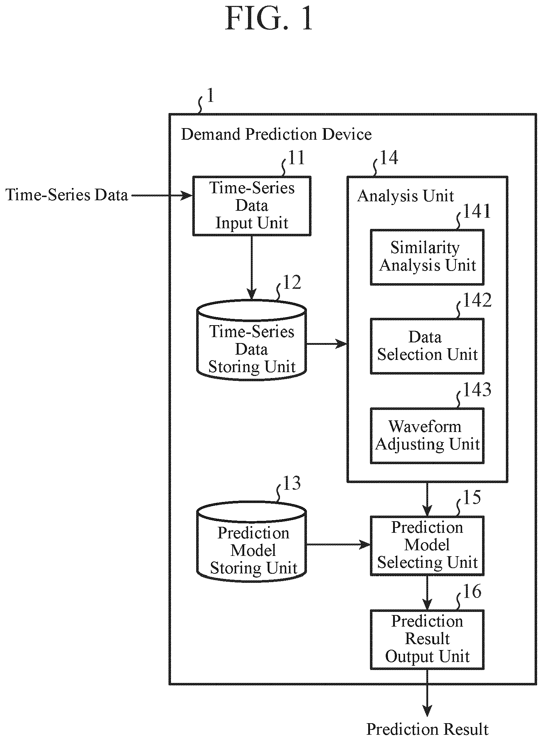

FIG. 1 is a block diagram showing a configuration of a demand prediction device according to a first embodiment.

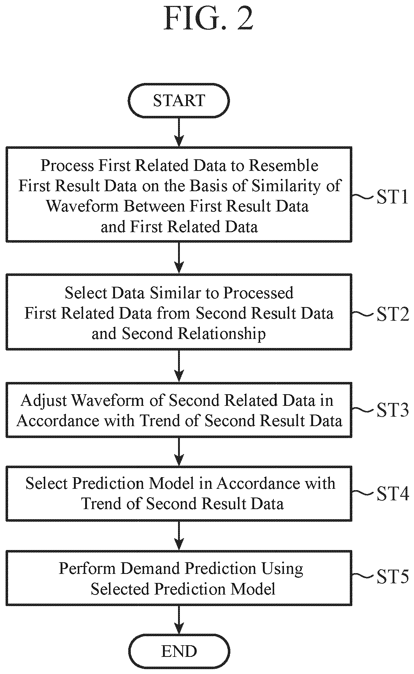

FIG. 2 is a flowchart showing a demand prediction method according to the first embodiment.

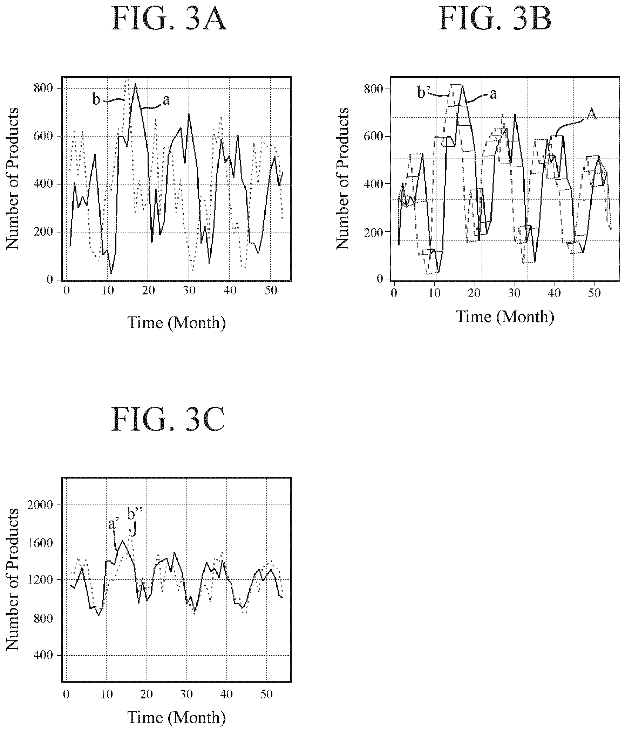

FIG. 3A is a graph showing an example of first result data and first related data. FIG. 3B is a graph showing the first result data of FIG. 3A and the first related data processed to resemble this first result data. FIG. 3C is a graph showing an example of second result data and waveform-adjusted second related data.

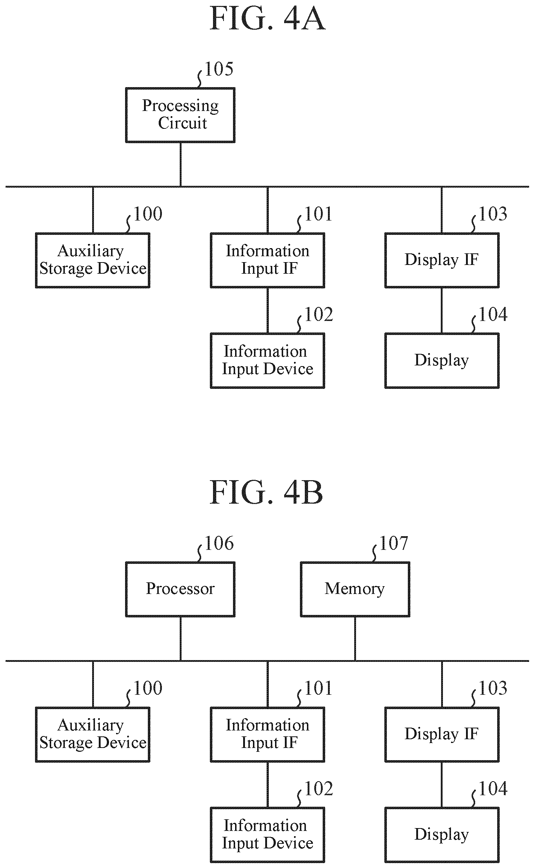

FIG. 4A is a block diagram showing a hardware configuration for implementing functions of the demand prediction device according to the first embodiment. FIG. 4B is a block diagram showing a hardware configuration for executing software that implements functions of the demand prediction device according to the first embodiment.

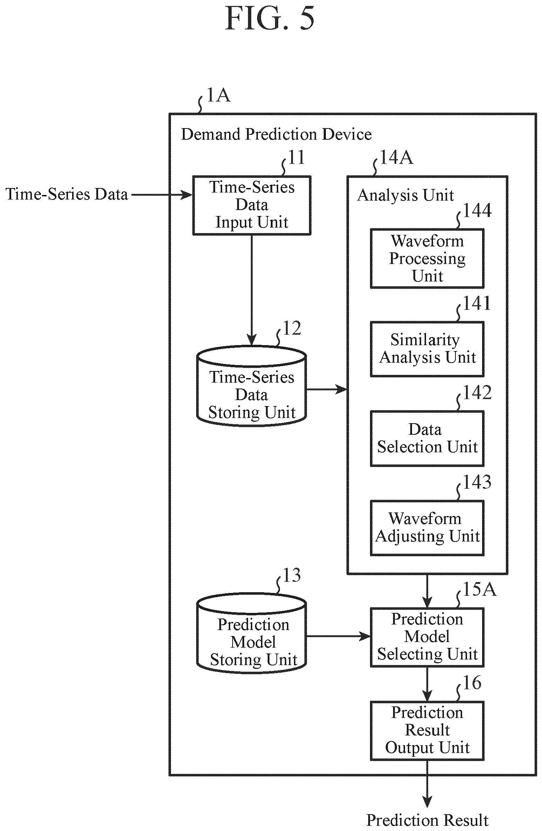

FIG. 5 is a block diagram showing a configuration of a demand prediction device according to a second embodiment.

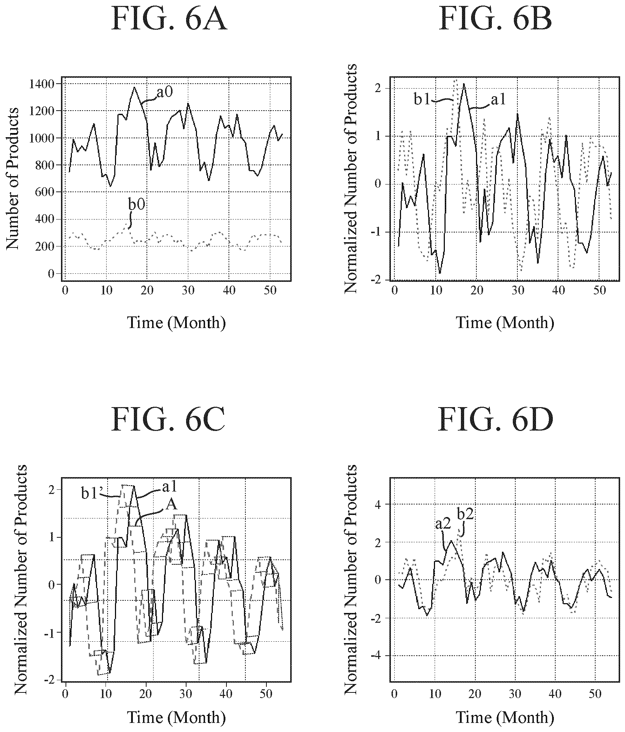

FIG. 6A is a graph showing an example of first result data and first related data. FIG. 6B is a graph showing normalized first result data and first related data. FIG. 6C is a graph showing the first result data of FIG. 6B and the first related data processed to resemble this first result data. FIG. 6D is a graph showing an example of second result data and waveform-adjusted second related data.

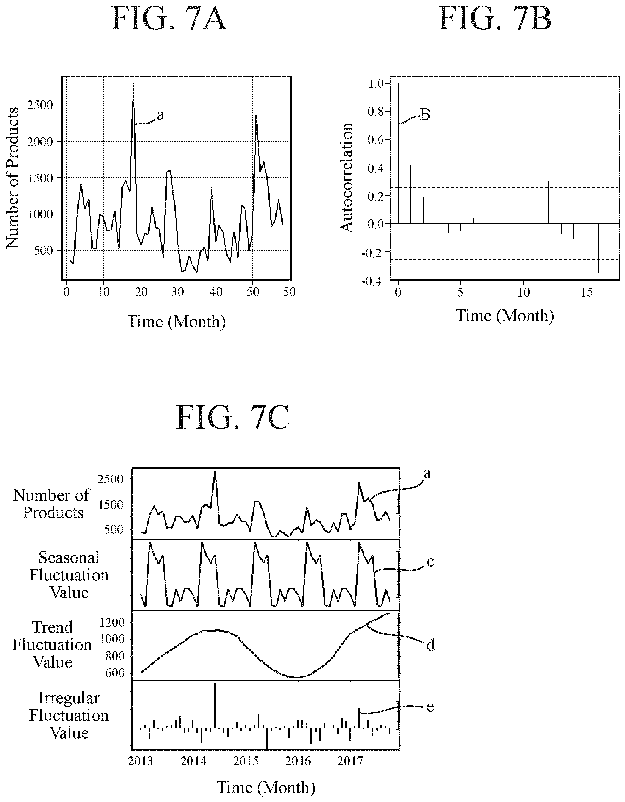

FIG. 7A is a graph showing an example of the first result data. FIG. 7B is a graph showing the result of autocorrelation analysis of the first result data of FIG. 7A. FIG. 7C is a graph showing the result of the first result data of FIG. 7A decomposed for each time-series component.

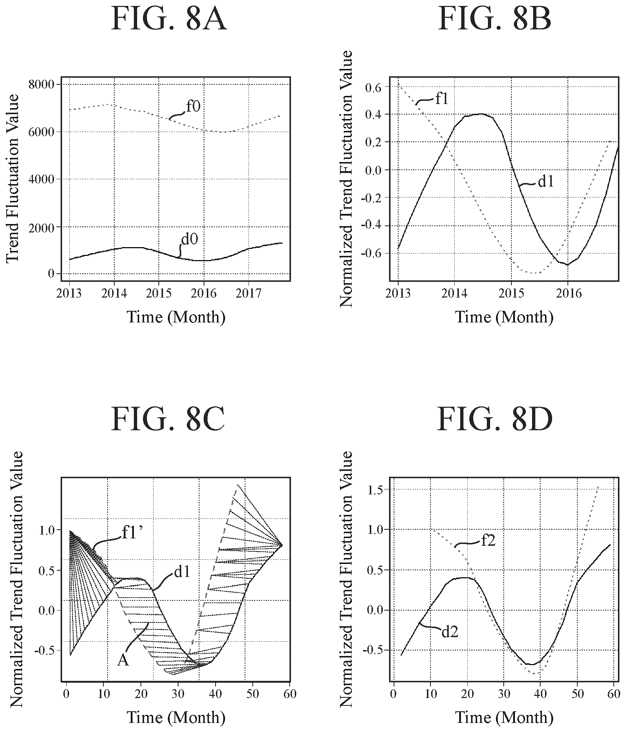

FIG. 8A is a graph showing an example of first result trend fluctuation data and first related trend fluctuation data. FIG. 8B is a graph showing normalized first result trend fluctuation data and first related trend fluctuation data. FIG. 8C is a graph showing the first result trend fluctuation data of FIG. 8B and the first related trend fluctuation data processed to resemble this first result trend fluctuation data. FIG. 8D is a graph showing an example of the second result trend fluctuation data and waveform-adjusted second related trend fluctuation data.

DESCRIPTION OF EMBODIMENTS

First Embodiment.

FIG. 1 is a block diagram showing a configuration of a demand prediction device 1 according to the first embodiment. The demand prediction device 1 is a device for performing demand prediction of a product, and as shown in FIG. 1, includes a time-series data input unit 11, a time-series data storing unit 12, a prediction model storing unit 13, an analysis unit 14, a prediction model selecting unit 15, and a prediction result output unit 16. Hereinafter, the product for which demand prediction is performed is simply referred to as "product".

The time-series data input unit 11 is an input unit for receiving input of time-series data. The time-series data storing unit 12 is a storing unit for storing time-series data for which input has been received by the time-series data input unit 11. The time-series data includes result data which is time series data obtained by sequentially observing result values of demand for the product over time, and related data which is time series data obtained by sequentially observing information related to demand for the product over time. Note that the related data is open data of information related to the demand for the product.

The result data includes, for example, result values of shipment amount, inventory amount, order amount, received order amount, and production amount of a product. The demand prediction of a product includes, for example, shipment amount prediction, inventory amount prediction, order amount prediction, received order amount prediction, and production amount prediction of a product.

The related data includes, for example, product economic indicators, weather, and temperature related to result data. The product economic indicators include, for example, stock prices of companies related to a product and trade-related information of a product. Further, the related data may be the number of devices using a product operated within the period in which the result data of the product is obtained.

The result data for which input has been received by the time-series data input unit 11 in a pre-stage (hereinafter referred to as a preparation stage) before the demand prediction is performed by the demand prediction device 1, is defined as "first result data". The first result data is time-series data of past demand result values of a product, and obtained by sequentially observing the demand result values over a long period of time until the preparation stage to reflect the trend of demand for the product over time. Further, in the preparation stage, the related data for which input has been received by the time-series data input unit 11 is defined as "first related data". The first related data is time-series data of information related to the past demand for the product, and obtained by sequentially observing the information related to the demand for the product until the preparation stage.

After the preparation stage has passed, in a stage (hereinafter referred to as an operation stage) where the demand prediction is performed by the demand prediction device 1, the result data for which input has been received by the time-series data input unit 11 is defined as "second result data". The second result data is time-series data obtained by sequentially observing demand result values during the operation stage. Further, the related data for which input has been received by the time-series data input unit 11 during the operation stage is defined as "second related data". The second related data is time-series data obtained by sequentially observing information related to demand for the product during the operation stage.

The prediction model storing unit 13 is a storing unit that stores a plurality of prediction models that can be used for demand prediction of the product. The prediction model includes, for example, a model for performing demand prediction by time-series analysis, such as an autoregressive model (AR model), a moving average model (MA model), an ARMA model (autoregressive moving average model), an ARIMA model (autoregressive integrated moving average model), and a SARIMA model (seasonal autoregressive integrated moving average model).

Further, the prediction model includes, for example, a model for performing demand prediction by multivariate analysis, such as regression analysis, cluster analysis, or multidimensional scaling. Furthermore, the prediction model may be a model for performing demand prediction by a method that combines time-series analysis and multivariate analysis, or a model for performing demand prediction by Bayesian estimation, sigma method, or state space model.

The time-series data storing unit 12 and the prediction model storing unit 13 may be included in an external device disposed separately from the demand prediction device 1. In this case, the time-series data input unit 11 may be included in the external device. The demand prediction device 1 is communication-connected with the external device, exchanges time-series data with the time-series data storing unit 12, and acquires a prediction model from the prediction model storing unit 13. Note that, the time-series data storing unit 12 and the prediction model storing unit 13 may be included in separate storage devices or may be included in one storage device.

The analysis unit 14 is a component that analyzes the first result data and the first related data and selects the second result data and the second related data to be used for the demand prediction of the product, and includes a similarity analysis unit 141, a data selection unit 142, and a waveform adjusting unit 143.

The similarity analysis unit 141 calculates a similarity of waveform between pieces of time-series data. For example, dynamic time warping (hereinafter referred to as DTW) can be used as an index of similarity. The similarity analysis unit 141 calculates a DTW distance between data at each time point in the result data and data at each time point in the related data. The similarity increases as the DTW distance value decreases, and decreases as the DTW distance value increases. Further, the similarity analysis unit 141 may use the correlation coefficient as the index of similarity, or may use both the DTW distance and the correlation coefficient as the index of similarity.

The similarity analysis unit 141 processes the first related data to resemble the first result data, on the basis of the similarity of waveform between the first result data and the first related data. For example, when the index of similarity is the DTW distance, the similarity analysis unit 141 processes the data at each time point in the first related data so that the DTW distance to the data at each time point in the first result data is minimized. In addition, when the correlation coefficient is the index of similarity, the similarity analysis unit 141 performs correlation analysis by shifting the data corresponding to the first result data by one time point, and processes the first related data so that the correlation coefficient of the entire first related data with respect to the first result data is maximized.

Further, the similarity analysis unit 141 calculates the similarity of waveform between the first related data processed to resemble the first result data, and the second result data and the second related data. The index of similarity is, as described above, the DTW distance, the correlation coefficient, or both the DTW distance and the correlation coefficient.

The data selection unit 142 selects the second result data similar to the first related data from the second result data sequentially obtained during the operation stage, on the basis of the similarity of waveform between the first related data processed to resemble the first result data, and the second result data. Further, the data selection unit 142 selects a second related data similar to the first related data from the second related data sequentially obtained during the operation stage, on the basis of the similarity of waveform between the first related data processed to resemble the first result data, and the second related data.

For example, when the index of similarity is the DTW distance, the data selection unit 142 selects the second result data in which the number of the minimum values of the DTW distance to the first related data is equal to or less than a certain number. When the index of similarity is the correlation coefficient, the data selection unit 142 selects the second result data in which the number of the maximum values of the correlation coefficient with the first related data is equal to or more than a certain number. The same applies when selecting the second related data similar to the first related data.

The waveform adjusting unit 143 adjusts the waveform of the second related data in accordance with the trend of the second result data selected by the data selection unit 142. For example, when the information related to a result value of the product in the second result data also fluctuates with the fluctuation of the result value, the waveform adjusting unit 143 time-shifts the second related data so that the time point when the result value in the second result data fluctuates coincides with the time point when the information related to this result value fluctuates.

The prediction model selecting unit 15 selects a prediction model from a plurality of prediction models stored in the prediction model storing unit 13 in accordance with the trend of the second result data selected by the data selection unit 142. For example, when the second result data dynamically fluctuates, the prediction model selecting unit 15 selects a prediction model whose prediction result is likely to fluctuate largely. On the other hand, the prediction model selecting unit 15 selects a prediction model whose prediction result is unlikely to fluctuate largely, if the fluctuation of the second result data is gentle.

The prediction model selecting unit 15 predicts the future demand for the product, by using the prediction model selected from the prediction model storing unit 13 and the second result data and the second related data selected by the data selection unit 142. The prediction result of the demand for the product is output from the prediction model selecting unit 15 to the prediction result output unit 16.

The prediction result output unit 16 outputs the prediction result of the demand for the product and presents it to the user. For example, the prediction result output unit 16 displays the demand result value of the product, which is the prediction result, on the display.

Note that, the prediction result output unit 16 may be included in an external device disposed separately from the demand prediction device 1. For example, the prediction result output unit 16 may be included in a display device connected to the demand prediction device 1 via a wired or wireless signal line.

FIG. 2 is a flowchart showing a demand prediction method according to the first embodiment, and shows the operation of the demand prediction device 1 of FIG. 1. Note that, in the pre-stage (preparation stage) of the series of processes shown in FIG. 2, the time-series data input unit 11 receives the input of the first result data and the first related data. In addition, it is assumed that the first result data reflects the trend of demand for the product over time.

The analysis unit 14 reads the first result data and the first related data from the time-series data storing unit 12, and processes the first related data to resemble the first result data, on the basis of the similarity of waveform between the first result data and the first related data (step ST1). For example, if the index of similarity is the DTW distance, the analysis unit 14 processes the data at each time point in the first related data so that the DTW distance to the data at each time point in the first result data is minimized.

FIG. 3A is a graph showing an example of first result data a and first related data b. In FIG. 3A, the horizontal axis shows time (month) and the vertical axis shows the number of products. The first result data a is time-series data of the result values of the past number of products shipped, the past number being obtained monthly until the preparation stage. The first related data b is time-series data of the past number of operating devices using the product, the past number being obtained monthly until the preparation stage. Note that, in the period shown in FIG. 3A, it is assumed that there is no large difference in data size between the first result data a and the first related data b.

FIG. 3B is a graph showing the first result data a in FIG. 3A and first related data b' processed to resemble the first result data a. When the index of similarity is the DTW distance, the similarity analysis unit 141 included in the analysis unit 14 calculates the DTW distance between the data at each time point in the first result data a and the data at each time point in the first related data b.

The similarity analysis unit 141 processes the data at each time point in the first related data b shown in FIG. 3A so that the DTW distance to the data at each time point in the first result data a is minimized. In FIG. 3B, the broken line A is a line segment indicating the minimum DTW distance. The similarity analysis unit 141 processes the first related data b to generate the first related data b' connected, by the broken line A, with the data at each time point in the first result data a.

Next, the analysis unit 14 selects the second result data and the second related data similar to the first related data b' processed to resemble the first result data a, from the second result data and the second related data acquired in the operation stage (step ST2). For example, the data selection unit 142 included in the analysis unit 14 selects the second result data and the second related data in which the number of the minimum values of the DTW distance to the first related data b' is equal to or more than a certain number.

Subsequently, the analysis unit 14 adjusts the waveform of the second related data in accordance with the trend of the second result data (step ST3). FIG. 3C is a graph showing an example of second result data a' and waveform-adjusted second related data b". For example, the waveform adjusting unit 143 included in the analysis unit 14 determines a time shift width in accordance with a trend of the second result data a', and time-shifts a waveform of the second related data b" with the determined shift width.

The prediction model selecting unit 15 selects a prediction model in accordance with the trend of the second result data a' selected by the analysis unit 14 (step ST4). For example, if there is a change point in the second result data a', or if the second result data a' has a rapid decrease or increase, the prediction model selecting unit 15 determines that the second result data a' dynamically fluctuates, and selects a prediction model whose prediction result is likely to fluctuate largely, from the prediction model storing unit 13. For example, there is a state space model as a prediction model whose prediction result is likely to fluctuate largely.

When the second result data a' has a gently simple decrease or simple increase, or has a constant value, the prediction model selecting unit 15 determines that the fluctuation of the second result data a' is gentle, and selects a

5

prediction model whose prediction result is unlikely to fluctuate largely, from the prediction model storing unit 13. As for a prediction model whose prediction result is unlikely to fluctuate largely, for example, there is a prediction model in which data is approximated with a regression line.

After that, the prediction model selecting unit 15 performs future demand prediction of the product, by using the selected prediction model and the second result data and the second related data selected by the analysis unit 14 (step ST5). For example, the prediction model selecting unit 15 predicts the number of products shipped in the future period to be predicted. The prediction result is output by the prediction result output unit 16 in a format that can be confirmed by the user. For example, the prediction result of the number of products shipped is displayed on the display.

Next, the hardware configuration that implements the functions of the demand prediction device 1 will be described.

The functions of the time-series data input unit 11, the time-series data storing unit 12, the prediction model storing unit 13, the analysis unit 14, the prediction model selecting unit 15, and the prediction result output unit 16 in the demand prediction device 1 are implemented by a processing circuit. That is, the demand prediction device 1 includes a processing circuit for executing the processes from step ST1 to step ST5 in FIG. 2. The processing circuit may be dedicated hardware or a central processing unit (CPU) that executes a program stored in a memory.

FIG. 4A is a block diagram showing a hardware configuration for implementing the functions of the demand prediction device 1. FIG. 4B is a block diagram showing a hardware configuration for executing software that implements the functions of the demand prediction device 1. In FIGS. 4A and 4B, an auxiliary storage device 100 is a storage device having a storage area in which data is read and written by the time-series data storing unit 12 and the prediction model storing unit 13. For example, the time-series data storing unit 12 stores the time-series data whose input has been received by the time-series data input unit 11 in a first storage area of the auxiliary storage device 100. Further, the prediction model storing unit 13 stores a plurality of pieces of prediction model data in a second storage area of the auxiliary storage device 100.

An information input interface 101 is an interface that relays the input of the time-series data received by the time-series data input unit 11 and the input of the prediction model data to be stored in the prediction model storing unit 13. Hereinafter, the interface will be abbreviated as IF. An information input device 102 is a device for inputting data to the demand prediction device 1, and is, for example, a touch panel, a mouse, or a keyboard. The data input using the information input device 102 is input to the demand prediction device 1 via the information input IF 101.

A display IF 103 is an IF that relays data output from the demand prediction device 1 to a display 104. The display 104 displays the input data. For example, the prediction result output unit 16 outputs the prediction result to the display 104 via the display IF 103. The display 104 displays the prediction result input via the display IF 103 on the screen.

In a case where the processing circuit is dedicated hardware shown in FIG. 4A, a processing circuit 105 corresponds, for example, to a single circuit, a composite circuit, a programmed processor, a parallel-programmed processor, an application specific integrated circuit (ASIC), a field-programmable gate array (FPGA), or a combination thereof. Note that, the functions of the time-series data input unit 11, the time-series data storing unit 12, the prediction model storing unit 13, the analysis unit 14, the prediction model selecting unit 15, and the prediction result output unit 16 may be implemented by separate processing circuits, or these functions may be collectively implemented by one processing circuit.

When the processing circuit is a processor 106 shown in FIG. 4B, the functions of the time-series data input unit 11, the time-series data storing unit 12, the prediction model storing unit 13, the analysis unit 14, the prediction model selecting unit 15, and the prediction result output unit 16 are implemented by software, firmware, or a combination of software and firmware. Software or firmware is described as programs and stored in a memory 107. By reading and executing the programs stored in the memory 107, the processor 106 implements the functions of the time-series data input unit 11, the time-series data storing unit 12, the prediction model storing unit 13, the analysis unit 14, the prediction model selecting unit 15, and the prediction result output unit 16. That is, the demand prediction device 1 includes the memory 107 for storing the programs which when executed by the processor 106, result in execution of the processes from step ST1 to step ST5 shown in FIG. 2. These programs cause a computer to execute the procedures or methods performed in the time-series data input unit 11, the time-series data storing unit 12, the prediction model storing unit 13, the analysis unit 14, the prediction model selecting unit 15, and the prediction result output unit 16. The memory 107 may be a computer-readable storage medium for storing the programs for causing the computer to function as the time-series data input unit 11, the time-series data storing unit 12, the prediction model storing unit 13, the analysis unit 14, the prediction model selecting unit 15, and the prediction result output unit 16.

Examples of the memory 107 correspond to a nonvolatile or volatile semiconductor memory, such as a random access memory (RAM), a read only memory (ROM), a flash memory, an erasable programmable read only memory (EPROM), or an electrically-EPROM (EEPROM), a magnetic disk, a flexible disk, an optical disk, a compact disk, a mini disk, and a DVD.

Note that, some of the functions of the time-series data input unit 11, the time-series data storing unit 12, the prediction model storing unit 13, the analysis unit 14, the prediction model selecting unit 15, and the prediction result output unit 16 may be implemented by dedicated hardware, and some of the functions may be implemented by software or firmware.

For example, the functions of the time-series data input unit 11, the time-series data storing unit 12, the prediction model storing unit 13, and the prediction result output unit 16 may be implemented by the processing circuit 105 as dedicated hardware, and the functions of the analysis unit 14 and the prediction model selecting unit 15 may be implemented by the processor 106 reading and executing the program stored in the memory 107. Thus, the processing circuit can implement each of the above functions by hardware, software, firmware, or a combination thereof.

As described above, the demand prediction device 1 according to the first embodiment processes the first related data to resemble the first result data obtained in the preparation stage, selects data similar to the processed first related data from the second result data and the second related data obtained in the operation stage, adjusts the waveform of the second related data in accordance with the trend of the selected second result data, and selects a prediction model in accordance with the trend of the second result data to perform demand prediction of the product. As a result, the trend of the demand for the product is reflected in the prediction model and data used for demand prediction of the product, so that the demand for the product can be accurately predicted.

Second Embodiment.

FIG. 5 is a block diagram showing a configuration of a demand prediction device 1A according to the second embodiment. In FIG. 5, the same components as those in FIG. 1 are designated by the same reference numerals, and the description thereof will be omitted. The demand prediction device 1A includes a time-series data input unit 11, a time-series data storing unit 12, a prediction model storing unit 13, an analysis unit 14A, a prediction model selecting unit 15A, and a prediction result output unit 16.

The analysis unit 14A processes the waveform of the result data and the waveform of the related data, and analyzes the result data and the related data the waveforms of which are processed, thereby selecting the second result data and the second related data used for demand prediction of the product. The analysis unit 14A includes a similarity analysis unit 141, a data selection unit 142, a waveform adjusting unit 143, and a waveform processing unit 144.

The waveform processing unit 144 processes the waveform of the time-series data. Waveform processing includes normalization of time-series data, decomposition into time-series components using a time-series analysis model, or both of normalization and decomposition into time-series components. When there is a large difference in data size between the result data to be analyzed and the related data to be analyzed, the waveform processing unit 144 normalizes these data.

For example, the waveform processing unit 144 converts the value range of the substrings of the result data and the related data into a range of from 0 to 1, by using the min-max normalization method based on the following Equation (1). In the following Equation (1), the data in which the time-series data T is normalized is defined as the time-series data $T^N$. Further, the data number i is a serial number sequentially assigned to the data at each time point of the time-series data. The function min is a function that outputs the minimum value of $T_{i,\omega}$, and the function max is a function that outputs the maximum value of $T_{i,\omega}$. $\omega$ is a data item of time-series data. For example, the data $T_{i,\omega}$ of the data number i in the result data is the "result value of the number of products shipped" at the time point corresponding to the data number i, and the data $T_{i,\omega}$ of the data number i in the related data is the "number of operating devices using the product" at the time point corresponding to the data number i.

$$T_i^N = (t_i - \min(T_{i,\omega}))/(\max(T_{i,\omega}) - \min(T_{i,\omega})) \dots (1)$$

Further, the waveform processing unit 144 may perform z-normalization based on the following Equation (2) to convert the average of the value range of the substrings of the result data and the related data into 0, and convert the standard deviation into 1.

In the following Equation (2), the function mesn is a function that outputs the mean value of $T_{i,\omega}$, and the function std is a function that outputs the standard deviation of $T_{i,\omega}$.

$$T_i^N = (t_i - \mathrm{mean}(T_{i,\omega}))/\mathrm{std}(T_{i,\omega}) \dots (2)$$

Further, the waveform processing unit 144 may perform level normalization based on the following Equation (3) to convert the average of the substrings of the result data and the related data to 0.

$$T_i^N = t_i - \mathrm{mean}(T_{i,\omega}) \dots (3)$$

FIG. 6A is a graph showing first result data a0 and first related data b0. In FIG. 6A, the horizontal axis shows time (month) and the vertical axis shows the number of products. The first result data a0 is time-series data of the result values of the past number of products shipped, the past number being obtained monthly until the preparation stage. The first related data b0 is time-series data of the past number of operating devices using the product, the past number being obtained monthly until the preparation stage.

FIG. 6B is a graph showing first result data a1 and first related data b1 normalized by the waveform processing unit 144. In FIG. 6B, the horizontal axis shows time (month) and the vertical axis shows the normalized number of products (hereinafter referred to as the normalized number of products). In the period shown in FIG. 6A, the data size of the first related data b0 is smaller than that of the first result data a0. Therefore, the waveform processing unit 144 normalizes the first result data a0 and the first related data b0. By normalizing the first result data a1 and the first related data b1, there is no large difference in the data size between the first result data a1 and the first related data b1 in the period shown in FIG. 6B.

FIG. 6C is a graph showing the first result data a1 of FIG. 6B and first related data b1' processed to resemble the first result data a1. The similarity analysis unit 141 processes the first related data b1 to resemble the first result data a1, on the basis of the similarity of waveform between the first result data a1 and the first related data b1 normalized by the waveform processing unit 144. For example, when the index of similarity is the DTW distance, the similarity analysis unit 141 processes the data at each time point of the first related data b1 so that the DTW distance to the data at each time point of the first result data a1 is minimized. In FIG. 6C, the broken line A is a line segment indicating the minimum DTW distance, as in FIG. 3B. The similarity analysis unit 141 processes the first related data b1 to generate first related data b1' connected, by the broken line A, with the data at each time point in the first result data a1.

FIG. 6D is a graph showing second result data a2 and waveform-adjusted second related data b2. In FIG. 6D, the horizontal axis shows time (month) and the vertical axis shows the normalized number of products. The waveform processing unit 144 normalizes the second result data and the second related data acquired in the operation stage. The data selection unit 142 selects data similar to the first related data b1', from the second result data and the second related data normalized by the waveform processing unit 144. For example, the data selection unit 142 selects data in which the number of the minimum values of the DTW distance to the first related data b' is equal to or more than a certain number. The waveform adjusting unit 143 adjusts the waveform of the second related data b2 in accordance with the trend of the second result data a2.

The prediction model selecting unit 15A selects a prediction model from the prediction model storing unit 13 in accordance with the trend of the second result data a2 selected by the analysis unit 14A, and performs demand prediction of the product using the prediction model for each time-series component. For example, the prediction model selecting unit 15A selects a prediction model whose prediction result is likely to fluctuate largely when the second result data a2 dynamically fluctuates. On the other hand, if the second result data a2 fluctuates gently, the prediction model selecting unit 15A selects a prediction model whose prediction result is unlikely to fluctuate largely.

Further, the waveform processing unit 144 may decompose the waveform of the result data and the waveform of the related data for each time-series component by using the time-series analysis model. Time-series components include trend circulation fluctuations, circulation fluctuations, seasonal fluctuations, and irregular fluctuations. The waveform processing unit 144 may decompose the waveform of the result data and the waveform of the related data for each fixed period such as quarterly, monthly, daily or hourly.

Further, the waveform processing unit 144 may perform autocorrelation analysis of the data at each time point of the time-series data, and when the data at each time point has an autocorrelation, decompose it into time-series components on the basis of the autocorrelation. Autocorrelation is used in the same meaning as autocovariance, and autocovariance R (t, s) is expressed by the following Equation (4). t is the time, and s is the time shifted by a certain time width from the time t. $X_t$ is data at time t in the time-series data, and $X_s$ is data at time s in the time-series data. $\mu$ is the average of the data at each time point of the time-series data, and $\sigma^2$ is the variance of the data at each time point of the time-series data. Function E is a function that outputs the expected value.

$$R(t,s) = (E[(X_t - \mu)(X_s - \mu)])/\sigma^2 \ldots (4)$$

FIG. 7A is a graph showing the first result data a, the horizontal axis shows time (month) and the vertical axis shows the number of products. In FIG. 7A, the first result data a is time-series data of the result values of the past number of products shipped, the past number being obtained monthly until the preparation stage. The waveform processing unit 144 decomposes the first result data a for each time-series component.

FIG. 7B is a graph showing the result of autocorrelation analysis of the first result data a in FIG. 7A. In FIG. 7B, the horizontal axis shows time (month) and the vertical axis shows the autocorrelation value B. The waveform processing unit 144 calculates the autocorrelation value B for each time series of the first result data a in accordance with the above Equation (4), and decomposes the first result data a for each time-series component on the basis of the autocorrelation value B.

FIG. 7C is a graph showing the result of decomposing the first result data a of FIG. 7A for each time-series component. In FIG. 7C, the horizontal axis shows time (month), and the vertical axis shows data showing the number of products decomposed for each time-series component. For example, the waveform processing unit 144 decomposes the first result data a into seasonal fluctuations, trend fluctuations, and irregular fluctuations. The result values of the past number of products shipped in the first result data a are represented by seasonal fluctuation data c, trend fluctuation data d, and irregular fluctuation data e.

The waveform processing unit 144 may perform both normalization and decomposition of result data and related data into time-series components.

FIG. 8A is a graph showing first result trend fluctuation data d0 and first related trend fluctuation data f0. In FIG. 8A, the horizontal axis shows time (month), and the vertical axis shows the trend fluctuation value each of the result data and the related data. The first result data is time-series data of the result values of the past number of products shipped, the past number being obtained monthly until the preparation stage. The first related data is the time-series data of the past number of operating devices using the product, the past number being obtained monthly until the preparation stage. The first result trend fluctuation data d0 is data in which the first result data is decomposed into trend fluctuation components by the waveform processing unit 144, and the first related trend fluctuation data f0 is data in which the first related data is decomposed into trend fluctuation components.

FIG. 8B is a graph showing first result trend fluctuation data d1 and first related trend fluctuation data f1 normalized by the waveform processing unit 144. In FIG. 8B, the horizontal axis shows time (month), and the vertical axis shows the normalized trend fluctuation value (hereinafter referred to as the normalized trend fluctuation value). In the period shown in FIG. 8A, the data size of the first result trend fluctuation data d0 is smaller than that of the first related trend fluctuation data f0. Therefore, the waveform processing unit 144 normalizes the first result trend fluctuation data d0 and the first related trend fluctuation data f0. By normalizing the first result trend fluctuation data d0 and the first related trend fluctuation data f0, there is no large difference in data size between the first result trend fluctuation data d0 and the first related trend fluctuation data f0 in the period shown in FIG. 8B.

FIG. 8C is a graph showing the first result trend fluctuation data d1 of FIG. 8B and first related trend fluctuation data f1' processed to resemble the first result trend fluctuation data d1.

The similarity analysis unit 141 processes the first related trend fluctuation data f1 to resemble the first result trend fluctuation data d1, on the basis of the similarity of waveform between the first result trend fluctuation data d1 and the first related trend fluctuation data f1 normalized by the waveform processing unit 144.

For example, when the index of similarity is the DTW distance, the similarity analysis unit 141 processes the data at each time point of the first related trend fluctuation data f1 so that the DTW distance to the data at each time point of the first result trend fluctuation data d1 is minimized. In addition, the broken line A is a line segment showing the minimum DTW distance, as in FIG. 3B. The similarity analysis unit 141 processes the first related trend fluctuation data f1 to generate the first related trend fluctuation data f1' connected with the data at each time point in the first result trend fluctuation data d1 by the broken line A.

FIG. 8D is a graph showing second result trend fluctuation data d2 and waveform-adjusted second related trend fluctuation data f2. In FIG. 8D, the horizontal axis shows time (month), and the vertical axis shows the normalized number of products. The waveform processing unit 144 decomposes the second result data and the second related data acquired in the operation stage into trend fluctuation components, and normalizes the trend fluctuation values. The data selection unit 142 selects data similar to the first related trend fluctuation data f1', from the normalized second result trend fluctuation data d2 and the second related trend fluctuation data f2. For example, the data selection unit 142 selects data in which the number of the minimum values of the DTW distance to the first related trend fluctuation data f1' is equal to or more than a certain number. The waveform adjusting unit 143 adjusts the waveform of the second related trend fluctuation data f2 in accordance with the trend of the second result trend fluctuation data d2.

The prediction model selecting unit 15A selects a prediction model in accordance with the trend of each time-series component of the second result data selected by the analysis unit 14A from the prediction model storing unit 13, and performs demand prediction of the product using a prediction model for each time-series component. For example, the prediction model selecting unit 15A selects a prediction model whose prediction result is likely to fluctuate largely, when the cyclic fluctuation data of the second result data dynamically fluctuates. On the other hand, if the seasonal fluctuation data of the second result data gently fluctuates, the prediction model selecting unit 15A selects a prediction model whose prediction result is unlikely to fluctuate largely. The prediction model selecting unit 15A outputs the data in which the prediction results obtained for respective time-series components are synthesized, as the final prediction result, to the prediction result output unit 16.

In addition, the prediction model selecting unit 15A may calculate an index of accuracy of the demand prediction of the product. For example, the prediction model selecting unit 15A analyzes the trend of the irregular fluctuation data of the second result data and the second related data, and calculates an index value in which as the data fluctuation is larger, the accuracy of prediction decreases, and as the data fluctuation is gentler, the accuracy of prediction increases.

Further, when the prediction model selected by the prediction model selecting unit 15A is a model for performing prediction by Bayesian estimation, the likelihood of the prediction calculated together with the posterior probability in Bayesian estimation may be used as an index of accuracy of the demand prediction of the product. The index of accuracy of the prediction is output from the prediction model selecting unit 15A to the prediction result output unit 16, and is presented to the user by the prediction result output unit 16.

Note that, the functions of the time-series data input unit 11, the time-series data storing unit 12, the prediction model storing unit 13, the analysis unit 14A, the prediction model selecting unit 15A, and the prediction result output unit 16 in the demand prediction device 1A are implemented by a processing circuit. The processing circuit may be the processing circuit 105 of the dedicated hardware shown in FIG. 4A or the processor 106 that executes a program stored in the memory 107 shown in FIG. 5B.

As described above, the demand prediction device 1A according to the second embodiment includes the waveform processing unit 144 that performs normalization of the result data and related data, decomposition to time-series components using a time-series analysis model, or both of the normalization and the decomposition to time-series components. The prediction model selecting unit 15A selects a prediction model in accordance with the trend of the second result data for each time-series component from a plurality of prediction models, and performs demand prediction of the product using the prediction model for each time-series component. As a result, the trend of past demand result values of the product and the trend of information related to past demand for the product are more accurately reflected in the prediction models and data used for demand prediction of the product, and therefore it is possible to accurately predict the demand for the product.

It should be noted that the present invention is not limited to the above-described embodiments, and within the scope of the present invention, free combination of the embodiments, modification of any constituent element of each of the embodiments, or omission of any constituent element of each of the embodiments can be made.

INDUSTRIAL APPLICABILITY

Since the demand prediction device according to the present invention can accurately predict the demand for products, it can be used for demand prediction of various products.

REFERENCE SIGNS LIST

1, 1A: demand prediction device, 11: time-series data input unit, 12: time-series data storing unit, 13: prediction model storing unit, 14, 14A: analysis unit, 15, 15A: prediction model selecting unit, 16: prediction result output unit, 100: auxiliary storage device, 101: information input IF, 102: information input device, 103: display IF, 104: display, 105: processing circuit, 106: processor, 107: memory, 141: similarity analysis unit, 142: data selection unit, 143: waveform adjusting unit, 144: waveform processing unit

**Claims**

1. A demand prediction device comprising:

    an analysis unit for processing first related data to resemble first result data, on a basis of a similarity of waveform between the first result data which is time series data of a past demand result value of a product and the first related data which is time series data of information related to past demand of the product, selecting data similar to the processed first related data, from second result data which is time series data of a demand result value of the product and second related data which is time series data of information related to demand of the product, and adjusting a waveform of the second related data in accordance with a trend of the second result data; and
    a prediction model selecting unit for selecting a prediction model in accordance with the trend of the second result data selected by the analysis unit, from a plurality of prediction models, and performing demand prediction of the product, by using the selected prediction model, and the second result data and the second related data selected by the analysis unit.

2. The demand prediction device according to claim 1, wherein
the analysis unit processes a waveform of at least one of the first and second result data and the first and second related data.

3. The demand prediction device according to claim 2, wherein
the analysis unit normalizes the waveform of at least one of the first and second result data and the first and second related data.

4. The demand prediction device according to claim 2 or 3, wherein
the analysis unit decomposes the waveform of at least one of the first and second result data and the first and second related data into time-series components.

5. The demand prediction device according to claim 4, wherein
the prediction model selecting unit selects a prediction model in accordance with the trend of the second result data for each of the time-series components, from a plurality of prediction models, and performs demand prediction of the product using the prediction model for each of the time-series components.

6. The demand prediction device according to claim 4, wherein
the prediction model selecting unit calculates an index of accuracy of demand prediction of the product, on a basis of the selected prediction model or the trend of the second result data and the second related data for each of the time-series components.

7. A demand prediction method, comprising the steps of:

processing, by an analysis unit, first related data to resemble first result data, on a basis of a similarity of waveform between the first result data which is time series data of a past demand result value of a product and the first related data which is time series data of information related to past demand of the product, selecting data similar to the processed first related data, from second result data which is time series data of a demand result value of the product and second related data which is time series data of information related to demand of the product, and adjusting a waveform of the second related data in accordance with a trend of the second result data; and
selecting, by a prediction model selecting unit, a prediction model in accordance with the trend of the second result data selected by the analysis unit, from a plurality of prediction models, and performing demand prediction of the product, by using the selected prediction model, and the second result data and the second related data selected by the analysis unit.

# FIG. 1

# FIG. 2

```
                    ┌─────────────┐
                    │    START    │
                    └─────────────┘
                           │
                           ▼
    ┌────────────────────────────────────────┐
    │     Process First Related Data to Resemble     │
    │ First Result Data on the Basis of Similarity of │  ∼ST1
    │    Waveform Between First Result Data     │
    │          and First Related Data           │
    └────────────────────────────────────────┘
                           │
                           ▼
    ┌────────────────────────────────────────┐
    │        Select Data Similar to Processed        │
    │ First Related Data from Second Result Data │  ∼ST2
    │          and Second Relationship           │
    └────────────────────────────────────────┘
                           │
                           ▼
    ┌────────────────────────────────────────┐
    │  Adjust Waveform of Second Related Data in  │  ∼ST3
    │ Accordance with Trend of Second Result Data │
    └────────────────────────────────────────┘
                           │
                           ▼
    ┌────────────────────────────────────────┐
    │ Select Prediction Model in Accordance with │  ∼ST4
    │       Trend of Second Result Data        │
    └────────────────────────────────────────┘
                           │
                           ▼
    ┌────────────────────────────────────────┐
    │      Perform Demand Prediction Using       │  ∼ST5
    │       Selected Prediction Model          │
    └────────────────────────────────────────┘
                           │
                           ▼
                    ┌─────────────┐
                    │     END     │
                    └─────────────┘
```

13

FIG. 3A

FIG. 3B

FIG. 3C

Time (Month)

Number of Products

# FIG. 4A

# FIG. 4B

# FIG. 5

Demand Prediction Device 1A

Time-Series Data → Time-Series Data Input Unit (11)

Time-Series Data Storing Unit (12)

Analysis Unit (14A)
- Waveform Processing Unit (144)
- Similarity Analysis Unit (141)
- Data Selection Unit (142)
- Waveform Adjusting Unit (143)

Prediction Model Storing Unit (13)

Prediction Model Selecting Unit (15A)

Prediction Result Output Unit (16)

→ Prediction Result

## FIG. 6A

## FIG. 6B

## FIG. 6C

## FIG. 6D

# FIG. 7A

# FIG. 7B

# FIG. 7C

FIG. 8A

FIG. 8B

FIG. 8C

FIG. 8D

## INTERNATIONAL SEARCH REPORT

| International application No. |
| --- |
| PCT/JP2019/010873 |

**A. CLASSIFICATION OF SUBJECT MATTER**
Int. Cl. G06Q30/02(2012.01)i, G06Q10/04(2012.01)i

According to International Patent Classification (IPC) or to both national classification and IPC

**B. FIELDS SEARCHED**

Minimum documentation searched (classification system followed by classification symbols)
Int. Cl. G06Q30/02, G06Q10/04

Documentation searched other than minimum documentation to the extent that such documents are included in the fields searched
Published examined utility model applications of Japan     1922-1996
Published unexamined utility model applications of Japan    1971-2019
Registered utility model specifications of Japan           1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2018-173837 A (MITSUBISHI HEAVY INDUSTRIES, LTD.) 08 November 2018, entire text, all drawings (Family: none) | 1-7 |
| A | JP 2005-141708 A (MUKUDA, Yoji) 02 June 2005, entire text, all drawings (Family: none) | 1-7 |
| A | JP 2007-141036 A (RICOH CO., LTD.) 07 June 2007, entire text, all drawings & US 2007/0118421 A1 | 1-7 |
| A | JP 2000-250888 A (HITACHI, LTD.) 14 September 2000, entire text, all drawings (Family: none) | 1-7 |

☒ Further documents are listed in the continuation of Box C.          ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17.05.2019 | 28.05.2019 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/010873 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2007-122264 A (FORESIGHT INFORMATION INSTITUTE CO., LTD.) 17 May 2007, entire text, all drawings (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015118412 A